# EUROPEAN PATENT SPECIFICATION

(11) **EP 1 858 222 B1**
(45) Date of publication and mention of the grant of the patent: **05.12.2012**
(21) Application number: 07008562.6
(22) Date of filing: 26.04.2007
(51) Int. Cl.: H04L 29/06

(54) **Method, apparatus and system for session adding**
Verfahren, Vorrichtung und System zum Hinzufügen von Sitzungen
Procédé, appareil et système d'ajout de session

(30) Priority: 26.04.2006 CN 200610077914
(43) Date of publication of application: 21.11.2007
(73) Proprietor: Huawei Technologies Co., Ltd., Shenzhen, Guangdong Province 518129 (CN)
(72) Inventor: Zhu, Dongming IPD, Huawei Administration Building,, Shenzhen, Guangdong Province 518129 (CN); Zhang, Hengliang IPD, Huawei Administration Building,, Shenzhen, Guangdong Province 518129 (CN)
(74) Representative: Epping - Hermann - Fischer

(56) References cited:
- EP-A- 1 560 368
- WO-A-2006/034658
- US-A1- 2003 026 245
- "Report on alternative architectures for combining CS bearers with IMS" 3GPP TSG-SA MEETING #26, XX, XX, 13 December 2004 (2004-12-13), page complete, XP002320984
- "TS 22.279, Technical Specification Group Services and Systems Aspects;Combined CS Calls and IMS Sessions; Stage 1 (Release 7)" 3RD GENERATION PARTNERSHIP PROJECT (3GPP); TECHNICAL SPECIFICATION (TS), XX, XX, vol. 22.279, no. V200, July 2005 (2005-07), pages 1-14, XP002406540

## Description

This application claims priority of CN Application No. 200610077914.3 filed on April 26, 2006, titled "Packet Network System With Session Adding Function, And Method And Apparatus For Realizing The Same".

### Field of the Invention

The present invention relates to the technical field of communications, in particular, to a method, an apparatus and a system for session adding during interworking between a CSI terminal and an IMS terminal in a packet network.

### Background of the Invention

CSI (Combining CS (Circuit Switched) and IMS (IP Multimedia Subsystem)) service is a research topic concerned in 3GPP (3rd Generation Partnership Project) standards. This topic aims at solving the problem of how to combine the 3G CC (Call Control) domain service with the IMS (IP Multimedia Subsystem) domain service.

The main studied content of CSI phase 1 is how to correlate a CS domain call with an IMS domain session of a CS-IMS bimodal terminal. Due to the limitation of its bearing capability, a terminal of CSI phase 1 preferably uses the CS to bear its real-time voice service.

When a CSI UE (CSI User Equipment), i.e. a CSI terminal, interworks with an IMS UE (IMS User Equipment), i.e. an IMS terminal, there exists a problem: if the IMS UE calls the CSI UE (using IMS signaling) to establish a voice session, the IMS session will directly reach the IMS part of the CSI UE, and what established directly between the two terminals after the CSI UE receiving the request message is an IMS voice session. However, due to limitations of the QoS problem at the present side of the CSI UE, the CSI UE prefers to use the CS to establish a real-time voice session.

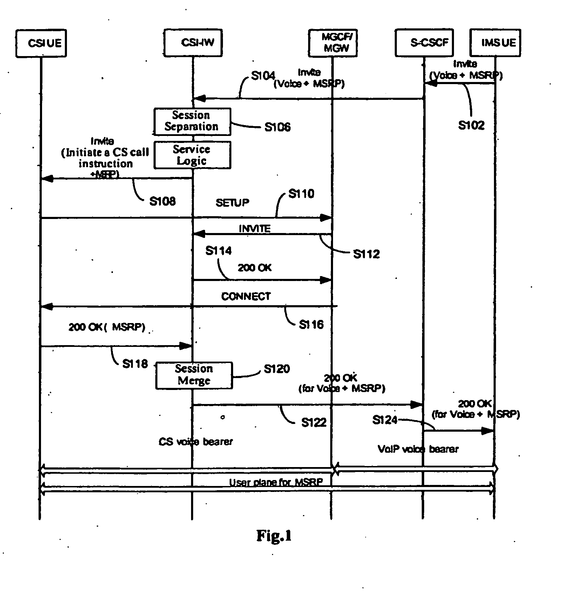

Fig.1 is a block diagram showing the interworking between a CSI terminal and an IMS terminal in the prior art. For convenience, the interworking between a CSI terminal and an IMS terminal is used for exemplary illustration in this text, but the present invention is not limited to these two terminals; for example, other VoIP (Voice over IP) terminals may also be used.

With respect to the topic for interworking between a CSI terminal and an IMS terminal, there exist the following related technology:

An interworking control function entity is deployed on the CSI terminal side. After receiving a session request from an IMS terminal, the interworking control function entity splits a session message including a plurality of media components into a session including real-time media components and a session including non-real-time media components, and then determines to choose to terminate the real time session in the CS domain and choose to terminate the non-real-time session in the IMS domain. The mechanism of this solution is shown in Fig.1:
Step S102: a VoIP terminal initiating an IMS session request to a CSI terminal, which request includes real-time media component and non-real-time media component;
Step S104: an IMS of the VoIP side forwarding the request to a CSI interworking control function entity (CSI-IW) on the CSI terminal side;
Step S106: the CSI-IW performing service logic processing according to the related information and splitting the session request;
Step S108: the CSI-IW sending the session request to the CSI terminal, wherein the request message includes a non-real-time media component and instruction information instructing the CSI terminal to initiate a CS bearer from the terminal to the network;
Step S110: the CSI terminal initiating a CS call to the CSI-IW after receiving the session request message;
Step S112: an MGCF (Media Gateway Control Function) entity receiving the CS call request from the CSI terminal, and mapping the request into an INVITE and sending the INVITE to the CSI-IW;
Step S114: the CSI-IW sending a 200 OK response message to the MGCF;
Step S116: the MGCF mapping the 200 OK response message into a connect message of the CS and sending it to the CSI terminal;
Step S118: the CSI terminal sending the 200 OK response message, wherein the response message only includes media information of non-real-time media information (MSRP);
Step S120: the CSI-IW merging the CS call and the IMS session from the CSI terminal;
Step S122: the CSI-IW sending the merged 200 OK response message to the called IMS; and
Step S124: the called IMS forwarding the 200 OK message to the VoIP terminal.

However, in the architecture and process of the above related technology, when the CSI terminal is calling and the IMS terminal is called, the CSI terminal cannot carry real time media and non-real-time media in a same IMS session because it has no capability of bearing real-time media in an IMS session. Thus, the CSI terminal cannot initiate a multimedia session to the opposite IMS terminal.

Therefore, it is needed to solve the problem that a CSI terminal cannot initiate a multimedia session to the opposite IMS terminal during the interworking between a CSI terminal and an IMS terminal in the above related technology.

"Report on alternative architectures for combining CS bearers with IMS", 3GPP TSG-SA Meeting #26, 13 December 2004 discloses a method for dealing multi-component (including voice) call to pure VOIP endpoint.

"TS 22.279, Technical Specification Group Service and Systems Aspects; Combined CS Calls and IMS Sessions; Stage 1 (Release 7)" 3RD GENERATION PARTNERSHIP PROJECT (3GPP), July 2005, pages 1-14, discloses service requirements for combining CS and IMS services using a CS speech or CS multimedia call in association with an IMS session.

### Summary of the Invention

In an embodiment of the invention, a system, a method and an apparatus are provided for session adding during the interworking between a CSI terminal and an IMS terminal. By session adding, a calling terminal is able to initiate a second session to the same terminal as the first session.

An embodiment of the invention provides a method for session adding during interworking between a Combining Circuit Switched and IP Multimedia System Services, referred to as CSI hereinafter, terminal and an IP Multimedia System, referred to as IMS hereinafter, terminal in a packet network, which includes:
receiving, by an interworking control function entity, a session request forwarded by a home domain Service-Call Session Control Function entity, referred to as S-CSCF, of a called terminal which is the IMS terminal;
correlating and matching, by the interworking control function entity, an existing session after receiving the session request;
performing session adding operation according to a result of the correlating and matching.

Another embodiment of the invention provides another method for session adding during interworking between a CSI terminal and an IMS terminal in a packet network, which includes:
receiving, by an interworking control function entity, a session request forwarded by a home domain Service-Call Session Control Function, referred to as S-CSCF hereinafter, of a calling terminal which is the CSI terminal;
correlating and matching, by the interworking control function entity, an existing session after receiving the session request;
performing session adding operation according to a result of the correlating and matching.

Another embodiment of the invention further provides an apparatus for session adding during the interworking between a CSI terminal and an IMS terminal in a packet network, which includes:
a matching module for correlating and matching existing sessions after receiving a session request; and
a session adding operating module for performing session adding operation according to a result of the correlating and matching.

Another embodiment of the invention provides a packet network system for interworking between a CSI terminal and an IMS terminal, which comprises:
a Service-Call Session Control Function entity, referred to as S-CSCF hereinafter, for forwarding a session request to a corresponding interworking control function entity after receiving the session request initiated by a calling terminal which is the CSI terminal to a called terminal which is the IMS terminal;
the interworking control function entity for correlating and matching an existing session after receiving the session request, and performing a session adding operation according to a result of the correlating and matching.

Another embodiment of the invention provides a method for controlling interworking between a CSI terminal and an IMS terminal in a packet network, which includes:
mapping, by a Media Gate Control Function entity, referred to as MGCF hereinafter, the CSI-related information in a Circuit Switched domain signaling to the CSI-related information in an IMS signaling.

Another embodiment of the invention further provides an apparatus for session adding during the interworking between a CSI terminal and an IMS terminal in a packet network, which comprises:
a mapping module for mapping CSI-related information contained in a Circuit Switched domain signaling to CSI-related information contained in an IMS signaling; and
a forwarding module for forwarding a session request to an interworking control function entity when receiving the session request sent from the mapping module.

In the technical solution provided by the embodiments of the invention, the CSI terminal may initiate a multimedia session to the opposite IMS terminal during the interworking between a CSI terminal and an IMS terminal, and the interworking control function entity is deployed on the Called Network side of the called IMS side. When a calling terminal initiates a session request to a called terminal, the interworking control function entity receives the session request forwarded by a home domain S-CSCF (Serving-Call Session Control Function) of the called terminal. Or the interworking control function entity is deployed to receive the session request forwarded by a home domain S-CSCF of the calling terminal, and then correlate and match the existing sessions, and perform a session adding operation according to the correlating and matching result. If the matching is successful, it adds the media component in the session request to the existing session; or it performs route proceeding on the session request by using the GRUU information of the called terminal as the RequestURI (Request Uniform Resource Identifier) information of the session request, so that a second session initiated by the calling terminal is terminated to the same terminal as the first session; or it merges the first session initiated by the calling terminal and the existing original first session into an IMS session in the Called Network side, and terminates it to the called terminal. By the invention, a CSI terminal may initiate a multimedia session to an opposite IMS terminal, and the called terminal does not perceive whether the opposite terminal is a CSI terminal or another IMS terminal.

### Brief Description of the Drawings

As a part of this application, the drawings illustrated herein are used for further describing the invention. The embodiments of the invention and illustrations thereof are illustrative only, and by no way to limit the scope of the invention. In the drawings:
Fig.1 is block diagram showing the interworking mechanism between a CSI terminal and an IMS terminal in the prior art;
Fig.2 is a flow chart of a method for session adding according to an embodiment of the invention;
Fig.3 is a block diagram of an apparatus for session adding according to another embodiment of the invention;
Fig.4 is a flow chart of a method for session adding during interworking between a calling terminal and a called terminal according to a first embodiment of the invention;
Fig.5 is a schematic diagram showing the process in which a CSI terminal calls an IMS terminal and a CSI-IW on the called IMS side modifies the original session according to the first embodiment of the invention;
Fig.6 is a schematic diagram showing the process in which a CSI terminal calls an IMS terminal and a CSI-IW on the called IMS side fills the caller preference information according to a second embodiment of the invention;
Fig.7 is a flow chart of a method for session adding during interworking between a calling terminal and a called terminal according to an embodiment of the invention; and
Fig.8 is a schematic diagram of the session adding process according to a third embodiment of the invention.

### Detailed Description of the Embodiments

Embodiments of the invention will now be illustrated in detail in conjunction with the drawings.

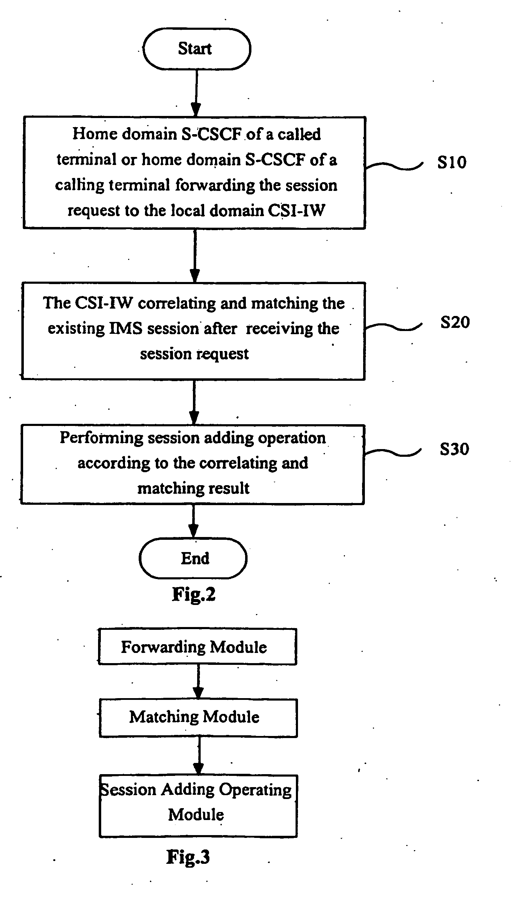

As shown in Fig.2, an embodiment of the invention provides a method for session adding during interworking between a CSI terminal and an IMS terminal:
Step S10: a calling terminal initiates a session request to a called terminal, and a home domain S-CSCF (Serving-CSCF) of the called terminal or a home domain S-CSCF of the calling terminal forwards the session request to a CSI-IW interworking function entity for controlling the interworking (i.e. interworking control function entity). The calling terminal is a CSI terminal or an IMS terminal, and the called terminal is a CSI terminal or an IMS terminal;
Step S20: the CSI-IW interworking function entity correlates and matches the existing IMS sessions after receiving the session request; and
Step S30: a session adding operation is performed according to the correlating and matching result.

As shown in Fig.3, one embodiment of the invention provides an apparatus 100 for session adding, which includes the following parts:
a forwarding module 10 for enabling a calling terminal to initiate a session request to a called terminal, and a home domain S-CSCF (Serving-CSCF) of the called terminal or a home domain S-CSCF of the calling terminal forwarding the session request to a CSI-IW interworking function entity according to specific situations, wherein the calling terminal is a CSI terminal or an IMS terminal, and the called terminal is a CSI terminal or an IMS terminal.

Additionally, the forwarding module 10 includes a first forwarding module (not shown) for enabling the S-CSCF to determine whether to forward a session request to a CSI-IW for processing according to one piece of the following information or any combination thereof when the S-CSCF receives the session request in the case that the session request is forwarded to the CSI-IW interworking entity by the home domain S-CSCF of the called terminal: whether the session request carries the PMI (Personal Mobile Identity) information of the calling terminal; and whether the calling terminal is a CSI terminal; and
the forwarding module 10 includes a second forwarding module (not shown) for enabling the S-CSCF to determine whether the local side terminal has CSI capability and determine the capability of an access network in which the local side terminal is located when the S-CSCF receives the session request in the case that the session request is forwarded to the CSI-IW interworking entity by the home domain S-CSCF of the calling terminal, and to determine whether to route the session request to the local side CSI-IW for service.

A matching module 20 for enabling the CSI-IW interworking entity to correlate and match the existing IMS sessions after receiving the session request; and
a session adding operating module 30 for performing the session adding operation according to the correlating and matching result.

Additionally, as described above, an embodiment of the invention further provides an MGCF enhancing method, wherein the MGCF maps the CSI-related information in a CS domain signaling to the CSI-related information in an IMS signaling. Specifically, the MGCF entity maps the CSI-related information carried in a user-to-user signaling in the CS domain signaling to the CSI-related information in an IMS signaling.

Additionally, in the above MGCF enhancing method, the MGCF maps one of the following information or any combination thereof carried in a CS domain signaling and an IMS signaling: the PMI information of a CSI terminal; the capability information of an access network in which the calling terminal is located; and the GRUU (Globally Routable User Agent (UA) URIs) information of a CSI terminal.

Additionally, one embodiment of the invention further provides an apparatus for session adding, which is physically integrated with an MGCF. The apparatus includes a mapping module (not shown) for mapping the CSI-related information in the CS domain signaling to the CSI-related information in the IMS signaling.

The apparatus further includes:
a forwarding module for receiving a session request sent from the mapping module and forwarding the session request to an interworking control function entity.

The mapping module maps the CSI-related information carried in a user-to-user signaling in the CS domain signaling to the CSI-related information in the IMS signaling.

The mapping module maps one of the following information or any combination thereof carried in the CS domain signaling and the IMS signaling:
the PMI information of the CSI terminal; the capability information of the access network in which the calling terminal is located; and the GRUU information of the CSI terminal.

The calling terminal is the CSI terminal, and the called terminal is the IMS terminal; or
the called terminal is the CSI terminal, and the calling terminal is the IMS terminal.

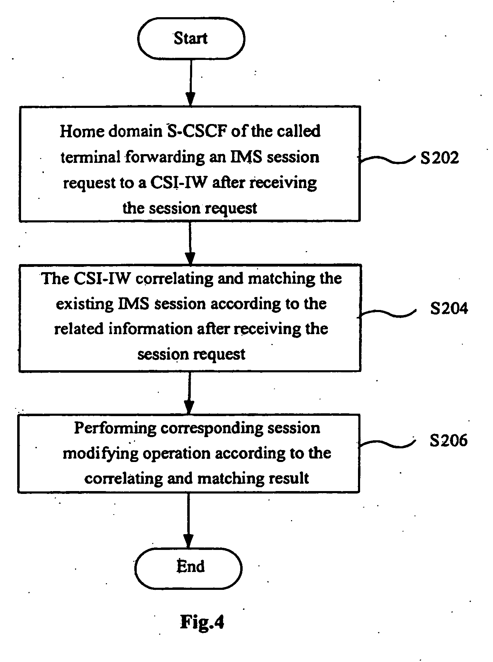

Specific embodiments of the invention will now be illustrated with reference to Fig.4 to Fig.7.

As shown to Fig.4, a method for session adding during the interworking between a CSI terminal and an IMS terminal includes the following steps:
Step S202: a calling terminal initiates a session request to a called terminal, and the home domain S-CSCF of the called terminal forwards the session request, optionally, when receiving an IMS session request, the home domain S-CSCF of the called terminal determines whether to forward the session request to a CSI-IW interworking function entity for processing according to one piece of the following information or any combination thereof: whether the PMI (Personal mobile identity) information of a CSI terminal is carried in the session request; and whether the calling terminal is a CSI terminal.
Step S204: the CSI-IW interworking function entity correlates and matches the existing IMS sessions after receiving the session request; and
Step S206: a session adding operation is performed according to the correlating and matching result.

More particularly, the method for session adding during the interworking between a CSI terminal and an IMS terminal includes:
Step S202: when receiving an IMS session request, the home S-CSCF of the called terminal determines whether to forward the session request to a CSI-IW interworking function entity for processing according to one of the following information or any combination thereof: whether the PMI information of a CSI terminal is carried in the session request; and whether the calling terminal is a CSI terminal.
Step S204: the CSI-IW interworking function entity correlates and matches the existing IMS sessions when receiving an IMS session request sent from a calling terminal to a called terminal; and
Step S206: If the matching is successful, the CSI-IW:
   initiates a process for modifying the existing IMS session, and adds a media component in the new IMS session request to the existing IMS session;
   further routes the session request message by using the GRUU information of the called terminal which is currently in session with the calling terminal as the RequestURI (Request Uniform Resource Identifier) information of the session; and
   sets caller preference information in the session request and further routes the session request.

If the matching is failed, the CSI-IW forwarding the IMS session request to the called terminal for processing.

The information correlated and matched by the CSI-IW includes the calling number information of the calling terminal and the called number information of the called terminal.

Additionally, the method may further include:
an MGCF of the CSI terminal's home domain IMS network maps the PMI information carried in the CS domain signaling to the IMS domain information, and the called terminal's home domain S-CSCF filters an IMS session request according to the PMI information in the message when receiving the IMS session request; if the message carries the PMI information of the CSI terminal, forwards the session request message to a CSI-IW for further processing.

The method for converting between the PMI information in the CS domain signaling and the IMS domain information by an MGCF of the CSI terminal home domain includes the following steps: the MGCF obtains the PMI information of the CSI terminal from a UUS (user to user signaling) signaling of the CS domain, and fills the information into a SIP signaling of the IMS domain.

According to the above method, one embodiment of the invention provides a system for Called Network control of session adding during the interworking between a calling terminal and a called terminal, in which system the CSI-IW is deployed on the called IMS network side. The function of each part of the system is described as follows:
CSI-IW interworking control function entity:
   if the matching is successful, the CSI-IW may:
      initiate a process for modifying the existing IMS session, and add a media component in the new IMS session request to the existing IMS session;
      further route the session request message by using the GRUU information of the called terminal which is currently in session with the calling terminal as the RequestURI (Request Uniform Resource Identifier) information of the session; and
      set caller preference information in the session request and further route the session request.
   if the matching is failed, the CSI-IW forwards the IMS session request to the called terminal for processing.

The information correlated and matched by the CSI-IW includes the calling number information of the calling terminal and the called number information of the called terminal.

Additionally, an MGCF of the CSI terminal's home domain IMS network maps the PMI information carried in the CS domain signaling to the IMS domain information, and the called terminal's home domain S-CSCF filters an IMS session request according to the PMI information in the message when receiving the IMS session request: if the message carries the PMI information of the CSI terminal, the called terminal's home domain S-CSCF forwards the session request message to a CSI-IW for further processing.

The method for converting between the PMI information in the CS domain signaling and the IMS domain information by an MGCF of the CSI terminal home domain includes: the MGCF obtains the PMI information of the CSI terminal from a UUS (user to user signaling) signaling of the CS domain, and fills it into a SIP signaling of the IMS domain.

In the embodiments described above, the calling terminal may be a CSI terminal or an IMS terminal; similarly, the called terminal may be a CSI terminal or an IMS terminal.

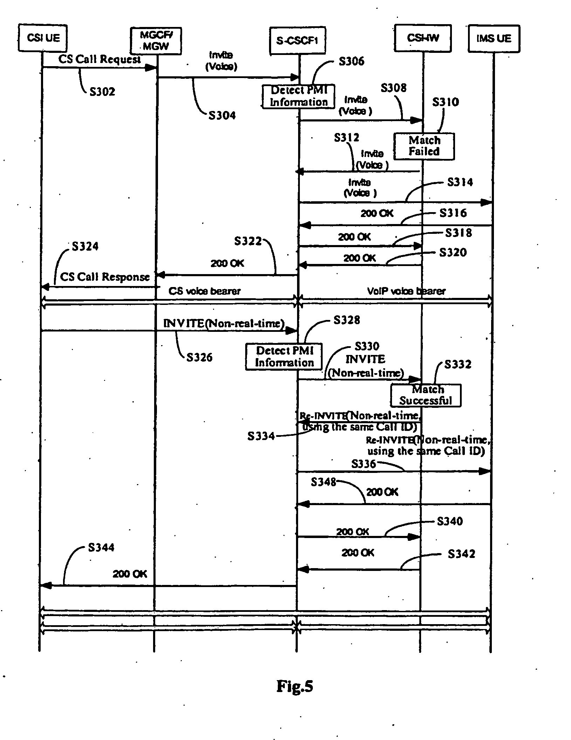

As shown in Fig.5, the process in which a CSI terminal calls an IMS terminal and the CSI-IW on the called IMS side modifies the original session includes:
Step S302: a CSI terminal initiates a voice call request in the CS domain;
Step S304: an MGCF maps the CS signaling into INVITE and forwards the INVITE to an S-CSCF of the called IMS network via the calling IMS network;
Step S306: the S-CSCF of the Called Network detects that the session request message contains PMI information;
Step S308: the S-CSCF of the Called Network routes the session request message to the CSI-IW for service processing;
Step S310: the CSI-IW matches the called number information according to the calling number information; the matching is failed;
Step S312: the CSI-IW forwards the request message to the called S-CSCF;
Step S314: the called S-CSCF forwards the session request message to the called IMS terminal;
Step S316: the called IMS terminal sends a 200 OK response message to the called S-CSCF;
Step S318: the called S-CSCF forwards the 200 OK response message to the CSI-IW;
Step S320: the CSI-IW forwards the 200 OK response message to the called S-CSCF;
Step S322: the called S-CSCF forwards the 200 OK response message to the calling network; and
Step S324: the MGCF of the calling network maps the 200 OK response message into a CS call response message, and forwards it to the CS part of the calling CSI terminal. At this point, a CS bearer is established between the CSI terminal and the MGW, and an IP bearer is established between the MGW and the IMS terminal;
Step S326: the CSI terminal initiates a non-real-time session request to the IMS terminal. This session request reaches the called S-CSCF via the calling network;
Step S328: the called S-CSCF detects that the message carries PMI information;
Step S330: the called S-CSCF forwards the message to the CSI-IW for processing;
Step S332: the CSI-IW matches the called number information according to the calling number information; the matching is successful;
Step S334: the CSI-IW initiates a session modifying message, which carries a new media component, to the IMS terminal;
Step S336: the session modifying message reaches the called IMS terminal via the called S-CSCF;
Step S338: the called IMS terminal sends a 200 OK response message;
Step S340: the called S-CSCF forwards the 200 OK response message to the CSI-IW;
Step S342: the CSI-IW forwards the 200 OK response message to the called S-CSCF; and
Step S344: the called S-CSCF sends the 200 OK response message to the IMS part of the calling IMS terminal via the calling network. At this point, adding non-real-time media between the CSI terminal and the IMS terminal is successful.

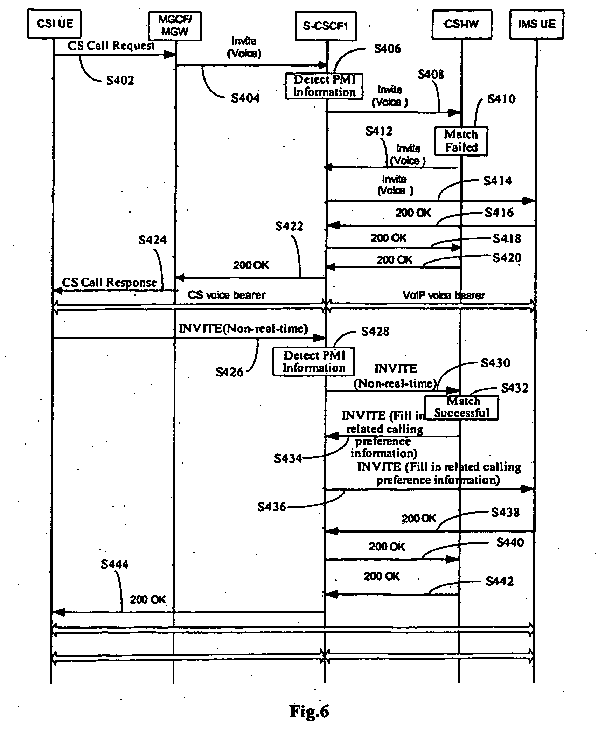

As shown in Fig.6, the process in which a CSI terminal calls an IMS terminal and the CSI-IW on the called IMS side fills the caller preference information includes the following steps:

In this embodiment, Steps S402 to S432 are basically the same as the above Steps S302 to S332, and will not be described here.
Step S434: the CSI-IW forwards a non-real-time session request targeting at the IMS terminal to the called S-CSCF. In the session request message, the CSI-IW has filled some caller preference information of the IMS terminal. In this step, the CSI-IW may use the GRUU information of the IMS terminal as the RequestURI information of the non-real-time session request;
Step S436: the called S-CSCF forwards the session request to the called IMS terminal;
Step S438: the called IMS terminal sends a 200 OK response message;
Step S440: the called S-CSCF forwards the 200 OK response message to the CSI-IW;
Step S442: the CSI-IW forwards the 200 OK response message to the called S-CSCF; and
Step S444: the called S-CSCF forwards the 200 OK response message to the IMS part of the calling CSI terminal via the calling network. At this point, adding non-real-time media between the CSI terminal and the IMS terminal is successful.

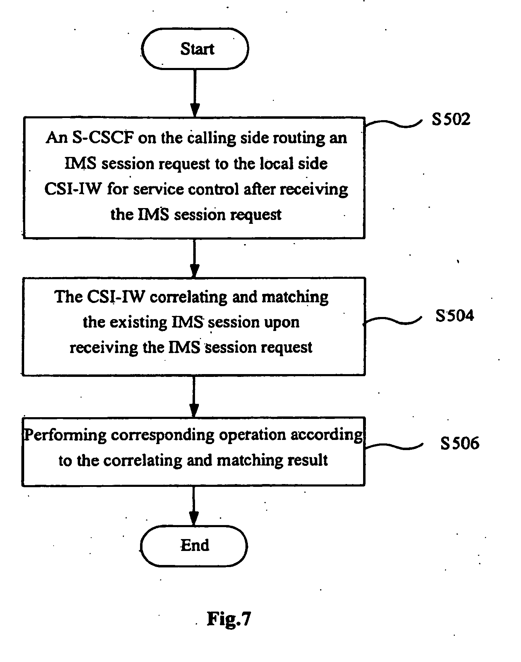

Fig.7 shows a flow chart of a method for session adding during the interworking between a CSI terminal and an IMS terminal.

Optionally, control can be conducted in the calling side network. In this alternative solution, the CSI-IW is located in a calling side network. The function of each part is as follows:
CSI-IW interworking control function entity may:
   correlate and match the existing IMS sessions when receiving a session request sent from the calling terminal to the called terminal.

If the matching is successful, the CSI-IW may:
initiate a process for modifying the existing session, and add a media component in a new session request to the existing session;
further route the session request message by using the GRUU information of the called terminal which is currently in session with the calling terminal as the RequestURI information of the session; and
set caller preference information in the session request, and further route the session request.

If the matching is failed, it means there is no IMS session from the calling terminal to the called terminal, then the CSI-IW forwards the IMS session request to the called terminal for processing.

The information correlated and matched by the CSI-IW includes the calling number information of the calling terminal and the called number information of the called terminal. The calling side S-CSCF:
After receiving the IMS session request, the calling side S-CSCF routes the IMS session request to the local side CSI-IW for service control if the local side terminal has CSI capability and the access network in which the local side terminal is located has real-time media bearing capability. The process in which the S-CSCF determines whether the local side terminal has CSI capability includes the following steps:
   the S-CSCF determines whether the terminal is a CSI terminal according to the terminal capability information carried during the user registering; and
   the S-CSCF obtains the capability information of the local side terminal by querying another system.

Additionally, the following step may be further performed: a CS domain function entity on the CSI calling side routes the CS call request from the CSI terminal to a CSI-IW of the home domain IMS of the CSI terminal for service logic control when receiving the CS call request.

As shown in Fig.7, the solution further provides an optional method for session adding during the interworking between a CSI terminal and an IMS terminal, which includes the following steps:
Step S502: After receiving the IMS session request, the calling side S-CSCF routes the IMS session request to the local side CSI-IW for service control if the local side terminal has CSI capability and the access network in which the local side terminal is located has real-time media bearing capability;
Step S504: the CSI-IW correlates and matches the existing IMS sessions when receiving the IMS session request;
Step S506: a session adding operation is performed according to the correlating and matching result.

In particular, the method for session adding during the interworking between a CSI terminal and an IMS terminal according to the optional solution includes:
Step S502: After receiving the IMS session request, the calling side S-CSCF routes the IMS session request to the local side CSI-IW for service control if the local side terminal supports CSI capability and the access network in which the local side terminal is located has real-time media bearing capability. Optionally, the process in which the S-CSCF determines whether the calling terminal has CSI capability may includes the following steps:
the S-CSCF determines whether the terminal is a CSI terminal according to the terminal capability information carried during the user registering; and
the S-CSCF obtains the capability information of the local side terminal by querying another system.
Step S504: the CSI-IW correlates and matches the existing IMS sessions when receiving the IMS session request;
Step S506: a session adding operation is performed according to the correlating and matching result,
if the matching is successful, the CSI-IW may:
   initiate a process for modifying the existing session, and add the media component in a new session request to the existing session;
   further route the session request message by using the GRUU information of the called terminal currently in session with the calling terminal as the RequestURI information of the session; and
   set caller preference information in the session request, and further route the session request.

If the matching is failed, the CSI-IW forwards the IMS session request to the IMS terminal for processing.

The information correlated and matched by the CSI-IW includes the calling number information of the calling terminal and the called number information of the called terminal.

Additionally, if the CSI terminal initiates the call request in the CS domain, the CS domain function entity forwards the call request to the CSI-IW in the home domain of the CSI terminal for processing when receiving the CS domain call request from the CSI terminal.

One embodiment of the invention further provides an apparatus for session adding during the interworking between a CSI terminal and an IMS terminal in a packet network, for example, the CSI interworking control function entity CSI-IW in the above embodiment, which includes:
a matching module for correlating and matching the existing sessions after receiving a session request; and
a session adding operating module for performing session adding operation according to the correlating and matching result.

If the matching is successful, the session adding operating module initiates a process for modifying the existing session and adds the media component in the session request to the existing session.

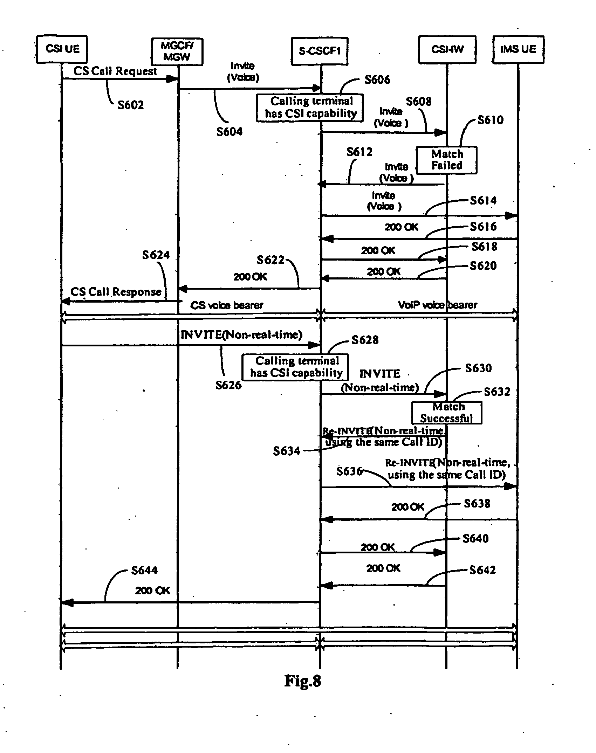

As shown in Fig.8, the session adding process in a third embodiment of the invention includes the following steps:
Step S602: a CSI terminal initiates a voice call request in the CS domain, and a network entity in the CS domain of the CSI terminal routes the call request to the calling IMS network which is the home domain of the CSI terminal;
Step S604: an MGCF maps the CS signaling into INVITE, and forwards to the S-CSCF of the calling IMS network;
Step S606: the S-CSCF of the calling network detects whether the calling terminal has CSI capability;
Step S608: the calling S-CSCF detects that the calling terminal has CSI capability, and routs the session request message to the CSI-IW for service processing;
Step S610: the CSI-IW matches according to the calling number information and the called number information; and the matching is failed;
Step S612: the CSI-IW forwards the request message to the calling S-CSCF;
Step S614: the calling S-CSCF forwards the session request message to the called IMS terminal via the called IMS network;
Step S616: the called IMS terminal sends a 200 OK response message to the calling S-CSCF via the called IMS network;
Step S618: the calling S-CSCF forwards the 200 OK response message to the CSI-IW;
Step S620: the CSI-IW forwards the 200 OK response message to the calling S-CSCF;
Step S622: the calling S-CSCF forwards the 200 OK response message to the calling MGCF;
Step S624: the calling MGCF maps the 200 OK response message into a CS call response message, and forwards the CS call response message to the CS part of the calling CSI terminal. At this point, a CS bearer is established between the CSI terminal and the MGW, and an IP bearer is established between the MGW and the IMS terminal;
Step S626: the CSI terminal initiates a non-real-time session request to the IMS terminal, which request reaches the calling S-CSCF;
Step S628: the calling S-CSCF queries whether the calling terminal has CSI capability;
Step S630: the calling S-CSCF learns that the calling terminal has CSI capability, and forwards the session request message to the CSI-IW for processing;
Step S632: the CSI-IW matches according to the calling number information and the called number information, and the matching is successful;
Step S634: the CSI-IW initiates a session modifying message carrying a new media component to the IMS terminal. In this step, the CSI-IW forwards the session request to the IMS terminal, and makes the session request reach the IMS terminal currently in session with the CSI terminal by setting the GRUU information of the IMS terminal as the RequestURI of the IMS session request or setting caller preference capability of the IMS terminal in the IMS session request;
Step S636: the session modifying message reaches the called IMS terminal via the called IMS network;
Step S638: the called IMS terminal sends a 200 OK response message, and the response message reaches the calling S-CSCF via the called IMS network;
Step S640: the calling S-CSCF forwards the 200 OK response message to the CSI-IW;
Step S642: the CSI-IW forwards the 200 OK response message to the calling S-CSCF; and
Step S644: the calling S-CSCF sends the 200 OK response message to the IMS part of the calling IMS terminal via the calling network. At this point, adding non-real-time media between the CSI terminal and the IMS terminal is successful.

It can be seen from the above description that in the technical solutions of the embodiments, a CSI terminal may initiate a multimedia session to the opposite IMS terminal during the interworking between a CSI terminal and an IMS terminal.

Additionally, one embodiment of the invention provides a solution to control a Called Network in which a CSI-IW is deployed on the called IMS side, so that the real-time session and non-real-time session initiated by the calling terminal are terminated on the same IMS terminal; or, the real-time session and non-real-time session initiated by the calling terminal are merged into an IMS session on the Called Network side and terminated to the called terminal. Thus, the called terminal does not perceive whether the opposite terminal is a CSI terminal or another IMS terminal.

For convenience, the invention is illustrated exemplarily by taking the interworking between a CSI terminal and an IMS terminal as an example, but the invention is not limited thereto, and other terminals such as VoIP (Voice over IP) terminals is applicable for the invention.

In the above description, the calling terminal can be a CSI terminal or an IMS terminal; similarly, the called terminal can be a CSI terminal or an IMS terminal.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the scope of the present invention.

Unless the context clearly requires otherwise, throughout the description and the claims, the words "comprise," "comprising," and the like are to be construed in an inclusive sense as opposed to an exclusive or exhaustive sense; that is to say, in the sense of "including, but not limited to." Words using the singular or plural number also include the plural or singular number respectively. Additionally, the words "herein," "above," "below" and words of similar import, when used in this application, shall refer to this application as a whole and not to any particular portions of this application. When the claims use the word "or" in reference to a list of two or more items, that word covers all of the following interpretations of the word: any of the items in the list, all of the items in the list and any combination of the items in the list.

Those described above are merely preferred embodiments for implementing the present invention, and by no way to limit the invention thereto. One skilled in the art should appreciate that various modifications and changes are available for the invention. Accordingly, various modifications, equivalent substitution and improvements within the principle of the invention are covered by the protection scope of the invention.

## Claims

1. A method for session adding during interworking between a Combining Circuit Switched and IP Multimedia System Services, referred to as CSI hereinafter, terminal and an IP Multimedia System, referred to as IMS hereinafter, terminal in a packet network, **characterized by** comprising:
receiving, by an interworking control function entity, a session request forwarded by a home domain Service-Call Session Control Function, referred to as S-CSCF hereinafter, of a called terminal which is the IMS terminal;
correlating and matching (S20), by the interworking control function entity, an existing session after receiving the session request;
performing (S30), by the interworking control function entity, session adding operation according to a result of the correlating and matching.

2. The method for session adding according to claim 1, wherein:
the interworking control function entity is located in a home domain IMS network of the called terminal;
after receiving the session request, the S-CSCF forwards the session request to the interworking control function entity for processing if the session request carries the Personal Mobile Identity information of the CSI terminal or if the calling terminal is the CSI terminal.

3. The method for session adding according to claim 1 or 2, wherein: a Media Gate Control Function entity in the home domain of the called terminal maps between the Personal Mobile Identity information carried in the CS domain signaling and IMS domain information.

4. The method for session adding according to any of claims 1 to 3, wherein: the interworking control function entity performs the correlating and matching based on calling number information of the calling terminal or called number information of the called terminal.

5. The method for session adding according to any of claims 1 to 4, wherein the interworking control function entity performing the session adding operation according to the result of the correlating and matching comprises:
when the matching is successful, initiating, by the interworking control function entity, a process for modifying the existing session and adding a media component contained in the session request to the existing session, or
setting caller preference information in the session request if the matching is successful, and routing the session request; or
routing the session request by using identification information of the called terminal as Request Uniform Resource Identifier information of the session request;
when the matching is failed, forwarding the session request to the called terminal for processing.

6. A method for session adding during interworking between a Combining Circuit Switched and IP Multimedia System Services, referred to as CSI hereinafter, terminal and an IP Multimedia System, referred to as IMS hereinafter, terminal in a packet network, **characterized by** comprising:
receiving, by an interworking control function entity, a session request forwarded by a home domain Service-Call Session Control Function, referred to as S-CSCF hereinafter, of a calling terminal which is the CSI terminal;
correlating and matching (S20), by the interworking control function entity, an existing session after receiving the session request; and
performing (S30), by the interworking control function entity, session adding operation according to a result of the correlating and matching.

7. The method according to claim 6, wherein performing session adding operation according to a result of the correlating and matching comprises:
when the matching is successful, initiating, by the interworking control function entity, a process for modifying the existing session and adding a media component contained in the session request to the existing session, or
setting caller preference information in the session request if the matching is successful, and routing the session request; or
routing the session request by using identification information of the called terminal as the Request Uniform Resource Identifier information of the session request;
when the matching is failed, forwarding, by the interworking control function entity, the session request to the called terminal for processing.

8. The method according to claim 6 or 7, wherein:
the interworking control function entity is located in a home domain IMS network of the calling terminal;
after receiving the session request, the S-CSCF determines whether to route to the local side interworking control function entity for service control based on whether the local side terminal having CSI capability or based on the capability of the access network in which the local side terminal is located.

9. The method according to claim 8, wherein determining whether the local side terminal having CSI capability comprises:
determining, by the S-CSCF, whether the terminal is a CSI terminal according to the terminal capability information carried during the user registering;
obtaining, by the S-CSCF, the capability information of the local side terminal by querying.

10. The method according to claim 8 or 9, further comprising:
after receiving a Circuit Switched domain call request, a Circuit Switched domain function entity forwarding the call request to the interworking control function entity in the home domain of the calling terminal for processing if the calling terminal initiates the call request in the Circuit Switched domain.

11. The method according to any of claims 6 to 10, wherein:
information correlated and matched by the interworking control function entity comprises calling number information of the calling terminal or called number information of the called terminal.

12. A packet network system for interworking between a Combining Circuit Switched and IP Multimedia System Services, referred to as CSI hereinafter, terminal and an IP Multimedia System, referred to as IMS hereinafter, terminal, **characterized by** comprising:
a Service-Call Session Control Function, referred to as S-CSCF hereinafter, for forwarding a session request to a corresponding interworking control function entity after receiving the session request initiated by a calling terminal which is the CSI terminal to a called terminal which is the IMS terminal;
the interworking control function entity for correlating and matching an existing session after receiving the session request, and performing a session adding operation according to a result of the correlating and matching.

13. The packet network system according to claim 12, wherein: the interworking control function entity is deployed in the home domain IMS network of the called terminal, and upon receiving the session request, the S-CSCF determines whether to forward the session request to the interworking control function entity for processing according to whether the session request carries Personal Mobile Identity information of the CSI terminal or whether the calling terminal is the CSI terminal.

14. The packet network system according to claim 12, wherein: the interworking control function entity is deployed in the home domain IMS network of the calling terminal, and after receiving the session request, the S-CSCF determines whether to route the session request to the local side interworking control function entity for service control according to whether the local side terminal has CSI capability or according to the capability of the access network in which the local side terminal is located.

15. The packet network system according to claim 14, wherein: determining by the S-CSCF whether the local side terminal has CSI capability comprises:
determining, by the S-CSCF, whether the terminal is the CSI terminal according to the terminal capability information carried during the user registering; or
obtaining, by the S-CSCF, the capability information of the local side terminal by querying.

16. The packet network system according to claim 13, wherein: the Media Gate Control Function entity of the called terminal maps between the Personal Mobile Identity information carried in a Circuit Switched domain signaling and IMS domain information.

17. The packet network system according to any of claims 12 to 16, wherein:
the interworking control function entity performs correlating and matching according to calling number information of the calling terminal or called number information of the called terminal.

18. The packet network system according to any of claims 12 to 17, wherein the session adding operation performed by the interworking control function entity after a successful matching comprises:
initiating a process for modifying the existing session, and adding the media component contained in the session request to the existing session; or
further routing the session request by using the Globally Routable User Agent Uniform Resource Identifiers information of the called terminal as the Request Uniform Resource Identifier information of the session request; or
setting caller preference information in the session request, and further routing the session request; and
the session adding operation performed by the interworking control function entity after a failure matching comprises:
forwarding the session request to the called terminal for processing.

19. An apparatus for session adding during interworking between a Combining Circuit Switched and IP Multimedia System Services, referred to as CSI hereinafter, terminal and an IP Multimedia System, referred to as IMS hereinafter, terminal in a packet network, **characterized by** comprising:
a matching module for correlating and matching existing sessions after receiving a session request forwarded from a Service-Call Session Control Function, referred to as S-CSCF hereinafter; and
a session adding operating module for performing session adding operation according to a result of the correlating and matching.

20. The apparatus for session adding according to claim 19, wherein:
if the matching is successful, the session adding operating module initiates a process for modifying an existing session and adds a media component contained in the session request to the existing session.

## Patentansprüche

1. Verfahren zum Hinzufügen von Sitzungen während einer Verknüpfung zwischen einem *Combining Circuit Switched* und *IP Multimedia System Services,* im Weiteren als CSI bezeichnet, -Endgerät und einem IP Multimedia-System, im Weiteren als IMS bezeichnet, -Endgerät in einem Paketnetz, **dadurch gekennzeichnet, dass** es umfasst:
Empfangen, durch eine Verknüpfungs-Steuerfunktionseinheit, einer von einer Heimdomänen - *Service-Call Session Control Function,* im Weiteren als S-CSCF bezeichnet, eines angerufenen Endgeräts, das das IMS-Endgerät ist, weitergeleiteten Sitzungsanforderung;
Korrelieren und Abgleichen (S20) einer existierenden Sitzung durch die Verknüpfungs-Steuerfunktionseinheit nach Empfangen der Sitzungsanforderung;
Durchführen (S30) einer Sitzungshinzufügungsoperation durch die Verknüpfungs-Steuerfunktionseinheit gemäß einem Ergebnis des Korrelierens und Abgleichens.

2. Verfahren zum Hinzufügen von Sitzungen nach Anspruch 1, wobei:
sich die Verknüpfungs-Steuerfunktionseinheit in einem Heimdomänen-IMS-Netz des angerufenen Endgeräts befindet;
nach dem Empfangen der Sitzungsanforderung die S-CSCF die Sitzungsanforderung an die Verknüpfungs-Steuerfunktionseinheit zur Verarbeitung weiterleitet, falls die Sitzungsanforderung die *Personal Mobile Identity*-Informationen des CSI-Endgeräts führt oder falls das anrufende Endgerät das CSI-Endgerät ist.

3. Verfahren zum Hinzufügen von Sitzungen nach Anspruch 1 oder 2, wobei:
eine *Media Gate Control Function*-Einheit in der Heimdomäne des angerufenen Endgeräts zwischen den in der CS-Domänensignalisierung geführten *Personal Mobile Identity*-Informationen und den IMS-Domäneninformationen abbildet.

4. Verfahren zum Hinzufügen von Sitzungen nach einem der Ansprüche 1 bis 3, wobei:
die Verknüpfungs-Steuerfunktionseinheit das Korrelieren und Abgleichen auf der Basis von anrufenden Nummer-Informationen des anrufenden Endgeräts oder angerufene Nummer-Informationen des angerufenen Endgeräts durchführt.

5. Verfahren zum Hinzufügen von Sitzungen nach einem der Ansprüche 1 bis 4, wobei die Verknüpfungs-Steuerfunktionseinheit, die die Sitzungshinzufügungsoperation gemäß dem Ergebnis des Korrelierens und Abgleichens durchführt, umfasst:
wenn das Abgleichen erfolgreich ist, Initiieren eines Prozesses zum Modifizieren der existierenden Sitzung durch die Verknüpfüngs-Steuerfünktionseinheit und Hinzufügen einer in der Sitzungsanforderung enthaltenen Medienkomponente zur existierenden Sitzung, oder
Setzen von Anruferpräferenzinformationen in der Sitzungsanforderung, falls das Abgleichen erfolgreich ist, und Vermitteln der Sitzungsanforderung; oder
Vermitteln der Sitzungsanforderung durch die Verwendung von Identifikationsinformationen des angerufenen Endgeräts als *Request Uniform Resource Identifier-Informationen* der Sitzungsanforderung;
wenn das Abgleichen erfolglos war, Weiterleiten der Sitzungsanforderung an das angerufene Endgerät zur Verarbeitung.

6. Verfahren zum Hinzufügen von Sitzungen während einer Verknüpfung zwischen einem *Combining Circuit Switched* und *IP Multimedia System Services,* im Weiteren als CSI bezeichnet, -Endgerät und einem IP Multimedia-System, im Weiteren als IMS bezeichnet, -Endgerät in einem Paketnetz, **dadurch gekennzeichnet, dass** es umfasst:
Empfangen, durch eine Verknüpfungs-Steuerfunktionseinheit, einer von einer Heimdomänen - *Service-Call Session Control Function,* im Weiteren als S-CSCF bezeichnet, eines anrufenden Endgeräts, das das CSI-Endgerät ist, weitergeleiteten Sitzungsanforderung;
Korrelieren und Abgleichen (S20) einer existierenden Sitzung durch die Verknüpfungs-Steuerfunktionseinheit nach Empfangen der Sitzungsanforderung; und
Durchführen (S30) einer Sitzungshinzufügungsoperation durch die Verknüpfungs-Steuerfunktionseinheit gemäß einem Ergebnis des Korrelierens und Abgleichens.

7. Verfahren nach Anspruch 6, wobei das Durchführen einer Sitzungshinzufügungsoperation gemäß einem Ergebnis des Korrelierens und Abgleichens umfasst:
wenn das Abgleichen erfolgreich ist, Initiieren eines Prozesses zum Modifizieren der existierenden Sitzung durch die Verknüpfungs-Steuerfunktionseinheit und Hinzufügen einer in der Sitzungsanforderung enthaltenen Medienkomponente zur existierenden Sitzung, oder
Setzen von Anruferpräferenzinformationen in der Sitzungsanforderung, falls das Abgleichen erfolgreich ist, und Vermitteln der Sitzungsanforderung; oder
Vermitteln der Sitzungsanforderung durch die Verwendung von Identifikationsinformationen des angerufenen Endgeräts als die *Request Uniform Resource Identifier-Informationen* der Sitzungsanforderung;
wenn das Abgleichen erfolglos war, Weiterleiten der Sitzungsanforderung an das angerufene Endgerät zur Verarbeitung durch die Verknüpfungs-Steuerfunktionseinheit.

8. Verfahren nach Anspruch 6 oder 7, wobei:
sich die Verknüpfungs-Steuerfunktionseinheit in einem Heimdomänen-IMS-Netz des anrufenden Endgeräts befindet;
die S-CSCF nach Empfangen der Sitzungsanforderung bestimmt, ob zur ortsseitigen Verknüpfungs-Steuerfunktionseinheit für eine Dienststeuerung vermittelt werden soll, auf der Grundlage dessen, ob das ortsseitige Endgerät eine CSI-Fähigkeit aufweist, oder auf der Grundlage der Fähigkeit des Zugangsnetzes, in dem sich das ortsseitige Endgerät befindet.

9. Verfahren nach Anspruch 8, wobei das Bestimmen, ob das ortsseitige Endgerät eine CSI-Fähigkeit aufweist, umfasst:
Bestimmen, durch die S-CSCF, ob das Endgerät ein CSI-Endgerät ist, gemäß den während der Benutzerregistrierung geführten Endgerät-Fähigkeitsinformationen;
Erhalten der Fähigkeitsinformationen des ortsseitigen Endgeräts durch die S-CSCF durch Abfragen.

10. Verfahren nach Anspruch 8 oder 9, das weiterhin umfasst:
nach Empfangen einer *Circuit* Sw*i*tched-Domänenanrufanforderung, Weiterleiten der Anrufanforderung durch eine *Circuit Switched*-Domänenfunktionseinheit an die Verknüpfungs-Steuerfunktionseinheit in der Heimdomäne des anrufenden Endgeräts zur Verarbeitung, falls das anrufende Endgerät die Rufanforderung in der *Circuits Switched*-Domäne initiiert.

11. Verfahren nach einem der Ansprüche 6 bis 10, wobei:
durch die Verknüpfüngs-Steuerfünktionseinheit korrelierte und abgeglichene Informationen anrufende Nummer-Informationen des anrufenden Endgeräts oder angerufene Nummer-Informationen des angerufenen Endgeräts umfassen.

12. Paketnetzsystem für eine Verknüpfung zwischen einem *Combining Circuit Switched* und *IP Multimedia System Services,* im Weiteren als CSI bezeichnet, -Endgerät und einem IP Multimedia-System, im Weiteren als IMS bezeichnet, -Endgerät, **dadurch gekennzeichnet, dass** es umfasst:
eine *Service-Call Session Control Function,* im Weiteren als eine S-CSCF bezeichnet, zum Weiterleiten einer Sitzungsanforderung an eine entsprechende Verknüpfüngs-Steuerfünktionseinheit nach Empfangen der Sitzungsanforderung, durch ein anrufendes Endgerät initiiert, das das CSI-Endgerät ist, an ein angerufenes Endgerät, das das IMS-Endgerät ist;
die Verknüpfungs-Steuerfünktionseinheit zum Korrelieren und Abgleichen einer existierenden Sitzung nach Empfangen der Sitzungsanforderung und Durchführen einer Sitzungshinzufügungsoperation gemäß einem Ergebnis des Korrelierens und Abgleichens.

13. Paketnetzsystem nach Anspruch 12, wobei: die Verknüpfungs-Steuerfünktionseinheit im Heimdomänen-IMS-Netz des angerufenen Endgeräts eingesetzt wird, und bei Empfangen der Sitzungsanforderung die S-CSCF bestimmt, ob die Sitzungsanforderung an die Verknüpfungs-Steuerfünktionseinheit zur Verarbeitung weitergeleitet werden soll, gemäß dem, ob die Sitzungsanforderung *Personal Mobile Identity*-Informationen des CSI-Endgeräts führt oder ob das anrufende Endgerät das CSI-Endgerät ist.

14. Paketnetzsystem nach Anspruch 12, wobei:
die Verknüpfüngs-Steuerfünktionseinheit im Heimdomänen-IMS-Netz des anrufenden Endgeräts eingesetzt wird, und die S-CSCF nach Empfangen der Sitzungsanforderung bestimmt, ob die Sitzungsanforderung an die ortsseitige Verknüpfungs-Steuerfünktionseinheit für eine Dienststeuerung vermittelt werden soll, gemäß dem, ob das ortsseitige Endgerät eine CSI-Fähigkeit aufweist, oder gemäß der Fähigkeit des Zugangsnetzes, in dem sich das ortsseitige Endgerät befindet.

15. Paketnetzsystem nach Anspruch 14, wobei: das Bestimmen durch die S-CSCF, ob das ortsseitige Endgerät eine CSI-Fähigkeit aufweist, umfasst:
Bestimmen durch die S-CSCF, ob das Endgerät das CSI-Endgerät ist, gemäß den während der Benutzerregistrierung geführten Endgerät-Fähigkeitsinformationen; oder
Erhalten der Fähigkeitsinformationen des ortsseitigen Endgeräts durch die S-CSCF durch Abfragen.

16. Paketnetzsystem nach Anspruch 13, wobei: die *Media Gate Control Function-*Einheit des angerufenen Endgeräts zwischen den in einer *Circuit Switched-*Domänensignalisierung geführten *Personal Mobile Identity*-Informationen und IMS-Domäneninformationen abbildet.

17. Paketnetzsystem nach einem der Ansprüche 12 bis 16, wobei:
die Verknüpfüngs-Steuerfünktionseinheit das Korrelieren und Abgleichen gemäß anrufenden Nummer-Informationen des anrufenden Endgeräts oder angerufenen Nummer-Informationen des angerufenen Endgeräts durchführt.

18. Paketnetzsystem nach einem der Ansprüche 12 bis 17, wobei die von der Verknüpfüngs-Steuerfünktionseinheit nach einem erfolgreichen Abgleichen durchgeführte Sitzungshinzufügungsoperation umfasst:
Initiieren eines Prozesses zum Modifizieren der existierenden Sitzung und Hinzufügen der in der Sitzungsanforderung enthaltenen Medienkomponente zur existierenden Sitzung; oder
weiteres Vermitteln der Sitzungsanforderung durch die Verwendung der *Globally Routable User Agent Uniform Resource Identifiers-Informationen* des angerufenen Endgeräts als die *Request Uniform Resource Identifier-Informationen* der Sitzungsanforderung; oder
Setzen von Anruferpräferenzinformationen in der Sitzungsanforderung und weiteres Vermitteln der Sitzungsanforderung; und
die von der Verknüpfungs-Steuerfunktionseinheit durchgeführte Sitzungshinzufügungsoperation nach einem Fehlerabgleich umfasst:
Weiterleiten der Sitzungsanforderung an das angerufene Endgerät zur Verarbeitung.

19. Vorrichtung zum Hinzufügen von Sitzungen während einer Verknüpfung zwischen einem *Combining Circuit Switched* und *IP Multimedia System Services,* im Weiteren als CSI bezeichnet, -Endgerät und einem IP Multimedia-System, im Weiteren als IMS bezeichnet, -Endgerät in einem Paketnetz, **dadurch gekennzeichnet, dass** sie umfasst:
ein Abgleichsmodul zum Korrelieren und Abgleichen existierender Sitzungen nach Empfangen einer Sitzungsanforderung, weitergeleitet von einer *Service-Call Session Control Function,* im Weiteren als S-CSCF bezeichnet; und
ein Sitzungshinzufügungsoperationsmodul zum Durchführen einer Sitzungshinzufügungsoperation gemäß einem Ergebnis des Korrelierens und Abgleichens.

20. Vorrichtung zum Hinzufügen von Sitzungen nach Anspruch 19, wobei:
falls das Abgleichen erfolgreich ist, das Sitzungshinzufügungsoperationsmodul einen Prozess zum Modifizieren einer existierenden Sitzung initiiert und eine in der Sitzungsanforderung enthaltene Medienkomponente zur existierenden Sitzung hinzufügt.

## Revendications

1. Procédé d'ajout de session durant un interfonctionnement entre un terminal combiné à Commutation de Circuits et de Services de Système Multimédia IP, appelé ci-après terminal CSI, et un terminal de Système Multimédia IP, appelé ci-après terminal IMS, dans un réseau par paquets, **caractérisé en ce qu'**il comprend:
la réception, par une entité de fonction de commande d'interfonctionnement, d'une requête de session transmise par une Fonction de Commande de Session d'Appel-Service, appelée ci-après S-CSCF, dans le domaine de rattachement d'un terminal appelé qui est le terminal IMS;
la corrélation et l'adaptation (S20), par l'entité de fonction de commande d'interfonctionnement, d'une session existante après la réception de la requête de session;
l'exécution (S30), par l'entité de fonction de commande d'interfonctionnement, d'une opération d'ajout de session en fonction d'un résultat de la corrélation et de adaptation.

2. Procédé d'ajout de session selon la revendication 1, dans lequel:
l'entité de fonction de commande d'interfonctionnement est située dans un réseau IMS du domaine de rattachement du terminal appelé;
après la réception de la requête de session, la S-CSCF transmet la requête de session à l'entité de fonction de commande d'interfonctionnement en vue de son traitement si la requête de session porte l'information d'Identité Personnelle Mobile du terminal CSI ou si le terminal appelant est le terminal CSI.

3. Procédé d'ajout de session selon la revendication 1 ou 2, dans lequel: une entité de Fonction de Commande de Passerelle Média dans le domaine de rattachement du terminal appelé met en correspondance l'information d'Identité Personnelle Mobile portée dans la signalisation du domaine CS et les informations du domaine IMS.

4. Procédé d'ajout de session selon l'une quelconque des revendications 1 à 3, dans lequel: l'entité de fonction de commande d'interfonctionnement exécute la corrélation et l'adaptation en fonction d'informations de numéro appelant du terminal appelant ou d'informations de numéro appelé du terminal appelé.

5. Procédé d'ajout de session selon l'une quelconque des revendications 1 à 4, dans lequel l'entité de fonction de commande d'interfonctionnement exécutant l'opération d'ajout de session en fonction du résultat de la corrélation et de l'adaptation comprend:
quand l'adaptation réussit, le lancement, par l'entité de fonction de commande d'interfonctionnement, d'un processus de modification de la session existante et
d'ajout d'une composante média contenue dans la requête de session à la session existante, ou
le réglage d'informations de préférences d'appelant dans la requête de session si l'adaptation réussit, et le routage de la requête de session; ou
le routage de la requête de session en utilisant des informations d'identification du terminal appelé comme Informations d'Identifiant de Ressource Uniforme de Requête de la requête de session;
quand l'adaptation échoue, la transmission de la requête de session au terminal appelé en vue de son traitement.

6. Procédé d'ajout de session durant un interfonctionnement entre un terminal combiné à Commutation de Circuits et de Services de Système Multimédia IP, appelé ci-après terminal CSI, et un terminal de Système Multimédia IP, appelé ci-après terminal IMS, dans un réseau par paquets, **caractérisé en ce qu'**il comprend:
la réception, par une entité de fonction de commande d'interfonctionnement, d'une requête de session transmise par une Fonction de Commande de Session d'Appel-Service, appelée ci-après S-CSCF, dans le domaine de rattachement d'un terminal appelant qui est le terminal CSI;
la corrélation et l'adaptation (S20), par l'entité de fonction de commande d'interfonctionnement, d'une session existante après la réception de la requête de session; et
l'exécution (S30), par l'entité de fonction de commande d'interfonctionnement, d'une opération d'ajout de session en fonction d'un résultat de la corrélation et de adaptation.

7. Procédé selon la revendication 6, dans lequel l'exécution de l'opération d'ajout de session en fonction d'un résultat de la corrélation et de l'adaptation comprend:
quand l'adaptation réussit, le lancement, par l'entité de fonction de commande d'interfonctionnement, d'un processus de modification de la session existante et d'ajout d'une composante média contenue dans la requête de session à la session existante, ou
le réglage d'informations de préférences d'appelant dans la requête de session si l'adaptation réussit, et le routage de la requête de session; ou
le routage de la requête de session en utilisant des informations d'identification du terminal appelé comme Informations d'Identifiant de Ressource Uniforme de Requête de la requête de session;
quand l'adaptation échoue, la transmission, par l'entité de fonction de commande d'interfonctionnement, de la requête de session au terminal appelé en vue de son traitement.

8. Procédé selon la revendication 6 ou 7, dans lequel:
l'entité de fonction de commande d'interfonctionnement est située dans un réseau IMS du domaine de rattachement du terminal appelant;
après la réception de la requête de session, la S-CSCF détermine s'il convient ou non de router vers l'entité de fonction de commande d'interfonctionnement côté local en vue d'une commande de service selon que le terminal côté local a une capabilité CSI ou non ou selon la capabilité du réseau d'accès dans lequel le terminal côté local est situé.

9. Procédé selon la revendication 8, dans lequel la détermination de la capabilité CSI ou non du terminal côté local comprend:
la détermination, par la S-CSCF, que le terminal est un terminal CSI ou non en fonction de l'information de capabilité de terminal portée durant l'enregistrement de l'utilisateur;
l'obtention, par la S-CSCF, de l'information de capabilité du terminal côté local par interrogation.

10. Procédé selon la revendication 8 ou 9, comprenant en outre:
après la réception d'une requête d'appel dans le domaine à Commutation de Circuits, la transmission par une entité de fonction dans le domaine à Commutation de Circuits de la requête d'appel à l'entité de fonction de commande d'interfonctionnement dans le domaine de rattachement du terminal appelant en vue de son traitement si le terminal appelant lance la requête d'appel dans le domaine à Commutation de Circuits.

11. Procédé selon l'une quelconque des revendications 6 à 10, dans lequel:
les informations corrélées et adaptées par l'entité de fonction de commande d'interfonctionnement comprennent des informations de numéro appelant du terminal appelant ou des informations de numéro appelé du terminal appelé.

12. Système de réseau par paquets destiné à interfonctionner entre un terminal combiné à Commutation de Circuits et de Services de Système Multimédia IP, appelé ci-après terminal CSI, et un terminal de Système Multimédia IP, appelé ci-après terminal IMS, **caractérisé en ce qu'**il comprend:
une Fonction de Commande de Session d'Appel-Service, appelée ci-après S-CSCF, destinée à transmettre une requête de session à une entité de fonction de commande d'interfonctionnement correspondante après la réception de la requête de session lancée par un terminal appelant qui est le terminal CSI auprès d'un terminal appelé qui est le terminal IMS;
l'entité de fonction de commande d'interfonctionnement destinée à corréler et adapter une session existante après la réception de la requête de session, et à exécuter une opération d'ajout de session en fonction d'un résultat de la corrélation et de adaptation.

13. Système de réseau par paquets selon la revendication 12, dans lequel: l'entité de fonction de commande d'interfonctionnement est déployée dans le réseau IMS du domaine de rattachement du terminal appelé, et à la réception de la requête de session, la S-CSCF détermine s'il convient ou non de transmettre la requête de session à l'entité de fonction de commande d'interfonctionnement en vue de son traitement selon que la requête de session porte ou non l'information d'Identité Personnelle Mobile du terminal CSI ou selon que le terminal appelant est le terminal CSI ou non.

14. Système de réseau par paquets selon la revendication 12, dans lequel: l'entité de fonction de commande d'interfonctionnement est déployée dans le réseau IMS du domaine de rattachement du terminal appelant, et après la réception de la requête de session, la S-CSCF détermine s'il convient ou non de router la requête de session vers l'entité de fonction de commande d'interfonctionnement côté local en vue d'une commande de service selon que le terminal côté local a une capabilité CSI ou non ou selon la capabilité du réseau d'accès dans lequel le terminal côté local est situé.

15. Système de réseau par paquets selon la revendication 14, dans lequel: la détermination, par la S-CSCF, de la capabilité CSI ou non du terminal côté local comprend:
la détermination, par la S-CSCF, que le terminal est ou non le terminal CSI en fonction de l'information de capabilité de terminal portée durant l'enregistrement de l'utilisateur; ou
l'obtention, par la S-CSCF, de l'information de capabilité du terminal côté local par interrogation.

16. Système de réseau par paquets selon la revendication 13, dans lequel: l'entité de Fonction de Commande de Passerelle Média du terminal appelé met en correspondance l'information d'Identité Personnelle Mobile portée dans une signalisation du domaine à Commutation de Circuits et les informations dans le domaine IMS.

17. Système de réseau par paquets selon l'une quelconque des revendications 12 à 16, dans lequel:
l'entité de fonction de commande d'interfonctionnement exécute la corrélation et l'adaptation en fonction d'informations de numéro appelant du terminal appelant ou d'informations de numéro appelé du terminal appelé.

18. Système de réseau par paquets selon l'une quelconque des revendications 12 à 17, dans lequel l'opération d'ajout de session exécutée par l'entité de fonction de commande d'interfonctionnement après une adaptation réussie comprend:
le lancement d'un processus de modification de la session existante et l'ajout de la composante média contenue dans la requête de session à la session existante; ou
la poursuite du routage de la requête de session en utilisant les informations d'Identifiants de Ressource Uniforme d'Agent Utilisateur Routable Globalement du terminal appelé comme informations d'Identifiant de Ressource Uniforme de Requête de la requête de session; ou
le réglage d'informations de préférences d'appelant dans la requête de session, et la poursuite du routage de la requête de session; et
l'opération d'ajout de session exécutée par l'entité de fonction de commande d'interfonctionnement après un échec d'adaptation comprend:
la transmission de la requête de session au terminal appelé en vue de son traitement.

19. Appareil d'ajout de session durant un interfonctionnement entre un terminal combiné à Commutation de Circuits et de Services de Système Multimédia IP, appelé ci-après terminal CSI, et un terminal de Système Multimédia IP, appelé ci-après terminal IMS, dans un réseau par paquets, **caractérisé en ce qu'**il comprend:
un module d'adaptation pour corréler et adapter des sessions existantes après la réception d'une requête de session transmise par une Fonction de Commande de Session d'Appel-Service, appelée ci-après S-CSCF; et
un module d'exécution d'ajout de session pour exécuter une opération d'ajout de session en fonction d'un résultat de la corrélation et de adaptation.

20. Appareil d'ajout de session selon la revendication 19, dans lequel:
si l'adaptation réussit, le module d'exécution d'ajout de session lance un processus de modification d'une session existante et ajoute une composante média contenue dans la requête de session à la session existante.
